# EUROPEAN PATENT SPECIFICATION

(11) **EP 1 477 748 B1**
(45) Date of publication and mention of the grant of the patent: **04.09.2013**
(21) Application number: 03701877.7
(22) Date of filing: 27.01.2003
(51) Int. Cl.: F25B 13/00, F25B 41/06

(54) **AIR CONDITIONER**
KLIMAANLAGE
CONDITIONNEUR D'AIR

(30) Priority: 28.01.2002 JP 2002018024
(43) Date of publication of application: 17.11.2004
(73) Proprietor: Toshiba Carrier Corporation, Tokyo 105-8001 (JP)
(72) Inventor: KUMAZAWA, Hideyuki, Fuji-shi, Shizuoka 417-0056 (JP); UENO, Kiyotaka, Kannamicho, Tagata-gun, Shizuoka 419-012 (JP)
(74) Representative: Granleese, Rhian Jane
(86) International application number: PCT/JP2003/000721
(87) International publication number: WO 2003/064940

(56) References cited:
- JP-A- 3 217 771
- JP-A- 10 288 408
- JP-A- 61 231 370
- JP-A- 63 073 060
- JP-U- 61 181 271

## Description

### Technical Field

The present invention relates to an air conditioner comprising an electronic expansion valve which controls flow amount of a refrigerant.

### Background Art

An air conditioner comprises a refrigerating cycle in which a refrigerant discharged from a compressor is passed through an outdoor heat exchanger, an expansion valve and an indoor heat exchanger and returned to the compressor. Recently, high-pressure R410 refrigerant has been used as well as conventionally used R22 refrigerant, as the refrigerant charged into the refrigerating cycle.

In an air conditioner comprising a large-capacity refrigerating cycle in which high-pressure R410 refrigerant is charged and a flow amount of the refrigerant is controlled in a wide range, a large electronic expansion valve (PMV) is employed as the expansion valve. The flow amount of the refrigerant can be adjusted in accordance with variation in the opening value of the electronic expansion valve.

However, since the large electronic expansion valve is expensive, employment of the expansion valve increases manufacturing costs.

In the large electronic expansion valve, even if the flow amount of the refrigerant can be controlled in a wide range, it cannot be controlled delicately.

In case the electronic expansion valve is clogged, circulation of the refrigerant is prevented. If the circulation of the refrigerant is prevented, a high-pressure-side pressure of the refrigerating cycle is increased up to a level which exceeds a design resistance to pressure of components forming the refrigerating cycle.

Japanese Utility Model Application No. 63912/1985 (Laid-open No. 181271/1986 discloses an air conditioner.

JP 63-073060 A discloses a refrigerator.

JP 61-231370 A discloses a refrigerator for cars.

JP 10-288408 A discloses a method for controlling an energy conservation refrigerating system with a control type for improving the energy conservation effect by optimally setting a method for operating a compressor.

JP 3 217771 A discloses an air conditioner with an opening and closing valve provided in a bypass pipe provided in parallel to an electronic expansion valve.

### Disclosure of the Invention

The object of the present invention is to provide an air conditioner excellent in economical efficiency and reliability, capable of controlling a flow amount of a refrigerant widely and finely without increase in manufacturing costs and preventing unnecessary rise of a high-pressure-side pressure.

According to an aspect of the present invention, there is provided an air conditioner comprising a refrigerating cycle which comprises a compressor, an outdoor heat exchanger, a plurality of electronic expansion valves connected parallel to each other and being different from each other in flow amount-opening value characteristic, and an indoor heat exchanger, and which urges a refrigerant discharged from the compressor to pass through the outdoor heat exchanger, each of the electronic expansion valves, and the indoor heat exchanger and to be sucked in the compressor, a detecting unit configured to detect degree of superheat SH of the refrigerant in any one of the indoor heat exchanger and the outdoor heat exchanger; and a controlling unit configured to control opening value of each of the electronic expansion valves to converge the degree of superheat SH detected by the detecting unit to predetermined target value SHs, wherein the controlling unit comprises: detecting means for detecting difference ASH between the degree of superheat SH and the target value SHs; controlling means for varying the opening value of the electronic expansion valve having a greater ratio of the flow amount to the opening value to converge the degree of superheat SH to the target value SHs, in a state in which the electronic expansion valve having a smaller ratio of the flow amount to the opening value is fixed at a predetermined opening value, if the difference ASH is equal to or greater than a predetermined set value ΔSH2; controlling means for varying the opening value of each of the electronic expansion valves if the difference ASH is smaller than the set value ΔSH2 and is equal to or greater than a predetermined set value ASH1: and controlling means for varying the opening value of the electronic expansion valve having the smaller ratio of the flow amount to the opening value to converge the degree of superheat SH to the target value SHs, in a state in which the electronic expansion valve having the greater ratio of the flow amount to the opening value is fixed at a predetermined opening value, if the difference ΔSH is smaller than the set value ASH1.

### Brief Description of the Drawings

FIG. 1 is a block diagram showing an embodiment of the present invention;
FIG. 2 is a graph showing characteristics of flow amount and opening value of one of electronic expansion valves according to the embodiment of the present invention;
FIG. 3 is a graph showing characteristics of flow amount and opening value of another electronic expansion valve according to the embodiment of the present invention;
FIG. 4 is a flowchart showing an operation of the embodiment of the present invention;
and
FIG. 5 is a graph showing an example of controlling opening value of each electronic expansion valve according to the embodiment of the present invention.

### Best Mode for Carrying Out the Invention

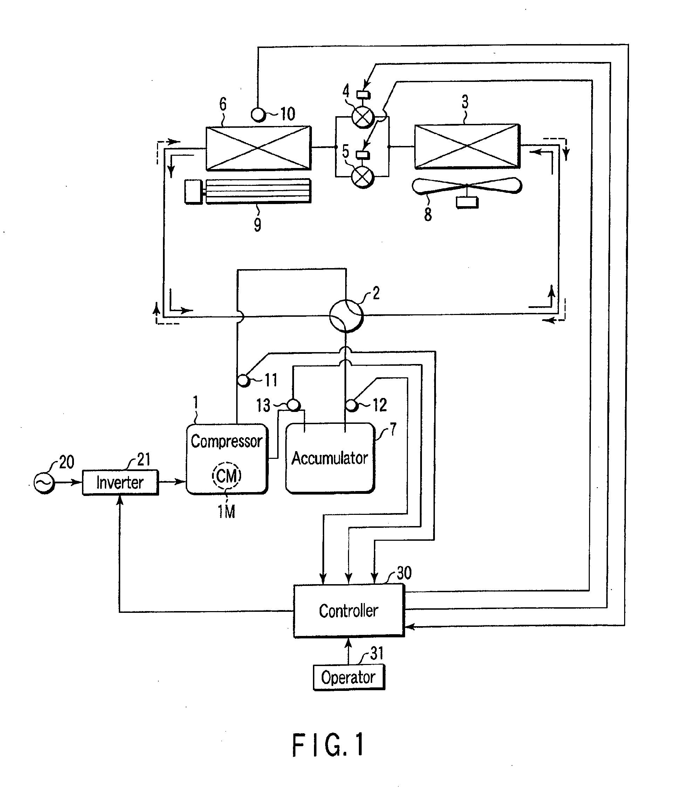

An embodiment of the present invention will be described below with reference to FIG. 1.

In a cooling operation, a refrigerant discharged from a compressor 1 flows to an outdoor heat exchanger 3 through a four-way valve 2 and the refrigerant which has passed through the outdoor heat exchanger 3 flows to an indoor heat exchanger 6 through two electronic expansion valves 4 and 5, as represented by arrows of solid lines. The refrigerant which has passed through the indoor heat exchanger 6 is sucked in the compressor 1 through the four-way valve 2 and an accumulator 7.

The electronic expansion valves 4 and 5 are pulse motor valves (PMV) whose opening value is continuously varied in accordance with the number of input drive pulse signals. The expansion valves are connected parallel to each other.

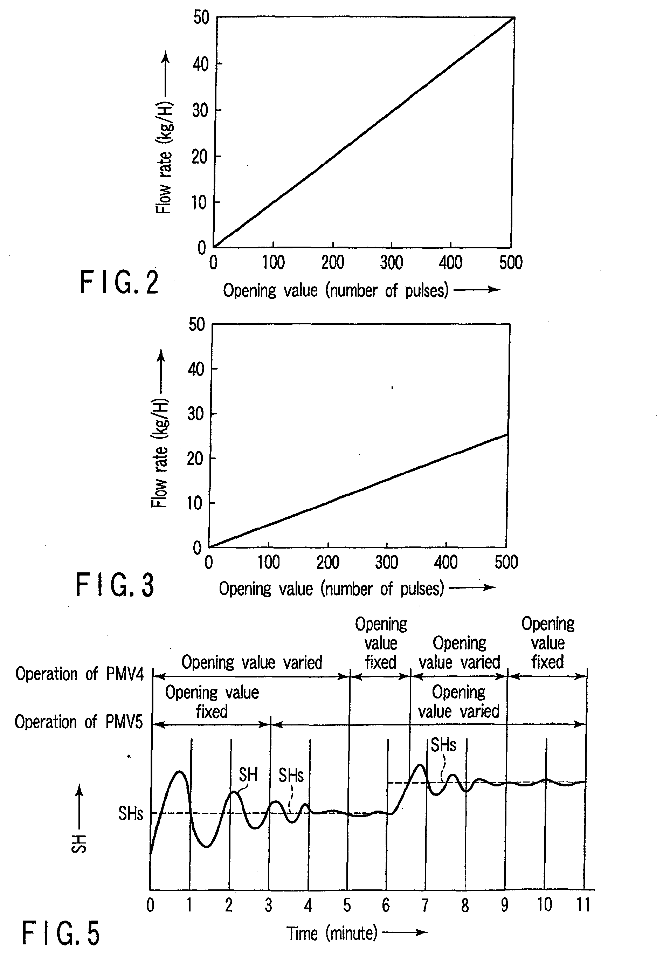

In addition, the electronic expansion valves 4 and 5 have mutually different flow amount-opening value characteristics. The flow amount-opening value characteristic of the electronic expansion valve 4 is shown in FIG. 2. The flow amount-opening value characteristic of the electronic expansion valve 5 is shown in FIG. 3. A ratio of the flow amount to the opening value (=flow amount/opening value of the refrigerant) of the electronic expansion valve 4 is greater than that of the electronic expansion valve 5.

In a heating operation, the refrigerant discharged from the compressor 1 flows to the indoor heat exchanger 6 through the four-way valve 2 and the refrigerant which has passed through the indoor heat exchanger 6 flow to the outdoor heat exchanger 3 through the electronic expansion valves 4 and 5, as represented by arrows of broken lines. The refrigerant which has passed through the outdoor heat exchanger 3 is sucked in the compressor 1 through the four-way valve 2 and the accumulator 7.

In other words, a heat-pump type cooling cycle comprises the compressor 1, the four-way valve 2, the outdoor heat exchanger 3, the electronic expansion valves 4 and 5, and the indoor heat exchanger 6.

An outdoor fan 8 for circulation of outdoor air is arranged for the outdoor heat exchanger 3. An indoor fan 9 for circulation of indoor air is arranged for the indoor heat exchanger 6. A room temperature sensor 10 is arranged in a suction path of indoor air of the indoor fan 9.

A temperature sensor 11 configured to sense a temperature of the refrigerant discharged from the compressor 1 is attached to a high-pressure-side pipe between a discharge port of the compressor 1 and the four-way valve 2. A temperature sensor 12 configured to sense a temperature of the refrigerant flowing from outdoor heat exchanger 3 or the indoor heat exchanger 6 is attached to a low-pressure-side pipe between the four-way valve 2 and the accumulator 7. A temperature sensor 13 configured to sense a temperature of the refrigerant sucked by the compressor 1 is attached to a low-pressure-side pipe between the accumulator 7 and an inlet port of the compressor 1.

An inverter 21 is connected to a commercial AC power supply 20. The inverter 21 rectifies the voltage of the commercial AC power supply 20, converts the rectified voltage into an AC voltage of a frequency (and level) corresponding to a command from a controller 30, and output the AC voltage. The output of the inverter 21 is supplied to a motor 1M of the compressor 1 as a drive power for the compressor 1.

The controller 30 controls the four-way valve 2, the electronic expansion valves 4 and 5, the outdoor fan 8, the indoor fan 9, and the inverter 21 in accordance with operations of an operator 31 and the temperatures sensed by the temperature sensors 10, 11, 12 and 13. The controller 30 comprises the following means (1) to (4) as main functions:
(1) a first detecting unit which detects air-conditioning load of a room in which the indoor heat exchanger 6;
(2) a first control unit which controls an output frequency F of the inverter 21 in accordance with the air-conditioning load detected by the first detecting unit;
(3) a second detecting unit which detects degree of superheat SH of the refrigerant in an evaporator (indoor heat exchanger 6 or outdoor heat exchanger 3); and
(4) a second control unit which controls the opening values of the electronic expansion valves 4 and 5 so as to converge the degree of superheat SH detected by the second detecting unit to a target value SHs.

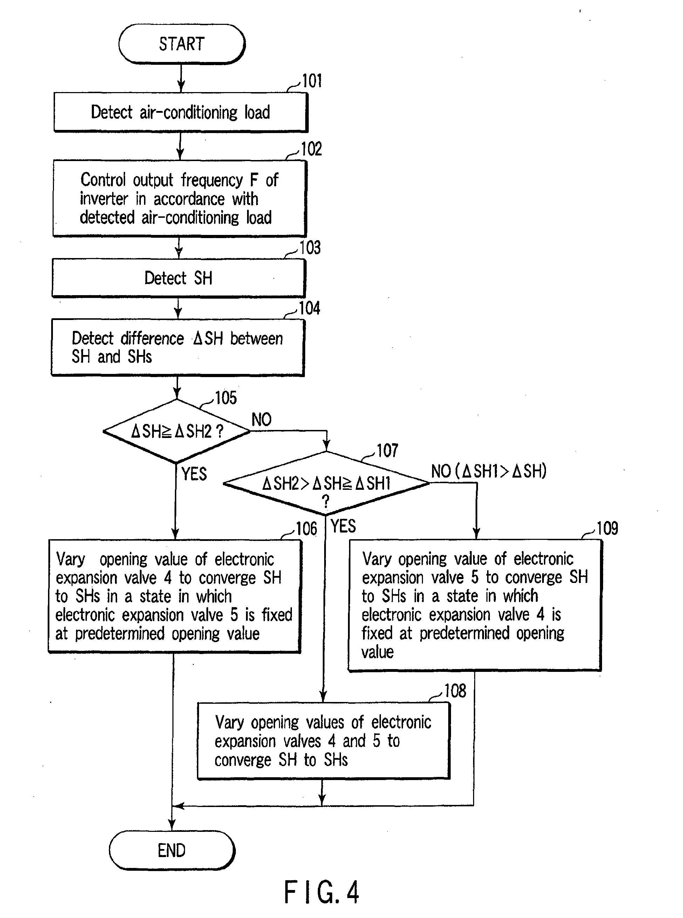

Next, an operation will be described with reference to a flowchart of FIG. 4.

In the cooling and heating operations, the difference between detected temperature Ta of the room temperature sensor 10 and set room temperature Ts is detected as the air-conditioning load of the room in which the indoor heat exchanger 6 is installed (step 101). The output frequency F of the inverter 21 is controlled in accordance with the air-conditioning load (step 102). In other words, if the air-conditioning load is small, the output frequency F of the inverter 21 is set at a small value. The output frequency F of the inverter 21 is increased in accordance with the increase in the air-conditioning load. When the air-conditioning load is reduced, the output frequency F of the inverter 21 is decreased. The number of revolutions (capacity) of the compressor 1 is varied in accordance with the variation of the output frequency F.

The temperature of the refrigerant which has passed through the evaporator (i.e. the indoor heat exchanger 6 at the cooling operation or the outdoor heat exchanger 3 at the heating operation) is detected by the temperature sensor 12. A difference between the detected temperature and the temperature detected by the temperature sensor 13 is detected as the degree of superheat SH of the refrigerant in the evaporator (step 103). A difference ΔSH between the degree of superheat SH and the target value SHs is detected (step 104).

The opening values of the electronic expansion valves 4 and 5 are controlled such that the degree of superheat SH is converged to the target value SHs and becomes stable (i.e. the difference ΔSH becomes zero). An example of controlling the opening values is shown in FIG. 5. The target value SHs is determined in accordance with the detected temperatures of the temperature sensors 11, 12 and 13.

When the operation is started, if the difference ΔSH between the degree of superheat SH and the target value SHs is large, i.e. equal to or more than set value ΔSH2 (YES in step 105), the electronic expansion valve 5 having a smaller ratio of the flow amount to the opening value is fixed at a predetermined opening value (arbitrarily selected opening value) and the opening value of the electronic expansion valve 4 having a greater ratio of the flow amount to the opening value is varied (step 106). The degree of superheat SH is thereby varied remarkably toward the target value SHs.

After that, if the difference ΔSH between the degree of superheat SH and the target value SHs becomes smaller, and is smaller than set value ΔSH2 and equal to or greater than set value ΔSH1 (YES in step 107), the opening values of the electronic expansion valves 4 and 5 are both varied (step 108). The degree of superheat SH is thereby varied toward the target value SHs.

If the difference ΔSH between the degree of superheat SH and the target value SHs becomes further smaller, i.e. smaller than set value ΔSH1 (NO in step 107), the electronic expansion valve 4 having a greater ratio of the flow amount to the opening value is fixed at a predetermined opening value and the opening value of the electronic expansion valve 5 having a smaller ratio of the flow amount to the opening value is varied (step 109). The degree of superheat SH is thereby converged smoothly to the target value SHs and becomes stable while varied finely toward the target value SHs.

If the target value SHs is varied, too, the opening values of the electronic expansion valves 4 and 5 are controlled similarly to the above-descried operation, in accordance with the difference between the degree of superheat SH and the target value SHs at the varying time.

The opening value of the electronic expansion valve 4 having a greater ratio of the flow amount to the opening value is fixed to zero and the opening value of the electronic expansion valve 5 having a smaller ratio of the flow amount to the opening value is varied, under the condition that the outdoor air temperature is low and the amount of circulation of the refrigerant in the refrigerating cycle becomes extremely small. Thus, the flow amount of the refrigerant can be controlled certainly and the degree of superheat SH can be converged to the target value SHs, under the condition that the amount of circulation of the refrigerant is extremely small.

By connecting the two electronic expansion valves 4 and 5 in parallel as described above, the amount of the refrigerant flowing to each of the electronic expansion valves 4 and 5 can be reduced as compared with the amount of the refrigerant flowing to a single electronic expansion valve as seen in the prior art. Therefore, even if high-pressure R410 refrigerant is charged into the refrigerating cycle, the flow amount of the refrigerant in the refrigerating cycle can be controlled certainly, without employing a large electronic expansion valve as seen in the prior art. The manufacturing costs are smaller in employment of two small electronic expansion valves 4 and 5 than in employment of a large electronic expansion valve.

The flow amount of the refrigerant can be controlled widely and finely by controlling the opening values of the electronic expansion valves 4 and 5 separately and by making the flow amount-opening value characteristics of the electronic expansion valves 4 and 5 different from each other.

In case where either the electronic expansion valve 4 or 5 is slogged, if the other electronic expansion valve is normally operated, circulation of the refrigerant in the refrigerating cycle is not prevented. For this reason, unnecessary rise of the high-pressure-side pressure can be avoided and high reliability can be maintained.

In the above-described embodiment, two electronic expansion valves are employed, However, the number of electronic expansion valves is not limited to two, but may be plural. The present invention is not limited to the embodiment described above and can be modified in various manners without departing from the scope of the invention as claimed.

## Claims

1. An air conditioner comprising:
a refrigerating cycle which comprises a compressor (1), an outdoor heat exchanger (3), a plurality of electronic expansion valves (4, 5) connected parallel to each other and being different from each other in flow amount-opening value characteristic, and an indoor heat exchanger (6), and which urges a refrigerant discharged from the compressor (1) to pass through the outdoor heat exchanger (3), each of the electronic expansion valves and the indoor heat exchanger (6) and to be sucked in the compressor (1);
a detecting unit configured to detect degree of superheat SH of the refrigerant in any one of the indoor heat exchanger (6) and the outdoor heat exchanger (1); and
a controlling unit configured to control opening value of each of the electronicexpansion valves to converge the degree of superheat SH detected by the detecting unit to a predetermined target value SHs,
wherein the controlling unit comprises:
detecting means for detecting a difference ΔSH between the degree of superheat SH and the target value SHs;
controlling means for varying the opening value of the electronic expansion valve (4) having a greater ratio
of the flow amount to the opening value to converge the degree of superheat SH to the target value SHs, in a state in which the electronic expansion valve (5) having a smaller ratio of the flow amount to the opening value is fixed at a predetermined opening value, if the difference ΔSH is equal to or greater than a predetermined set value ΔSH2;
controlling means for varying the opening value of each of the electronic expansion valves if the difference ΔSH is smaller than the set value ΔSH2 and is equal to or greater than a predetermined set value ΔSH1; and
controlling means for varying the opening value of the electronic expansion valve (5) having the smaller ratio of the flow amount to the opening value to converge the degree of superheat SH to the target value SHs, in a state in which the electronic expansion valve (4) having the greater ratio of the flow amount to the opening value is fixed at a predetermined opening value, if the difference ΔSH is smaller than the set value ΔSH1.

2. An air conditioner according to claim 1, further comprising:
an inverter (21) configured to output a drive power for the compressor (1);
a further detecting unit configured to detect air-conditioning load of a room in which the indoor heat exchanger (6) is installed;
a further controlling unit configured to control an output frequency of the inverter (21) in accordance with the air-conditioning load detected by the further detecting unit.

## Patentansprüche

1. Klimaanlage, die aufweist:
einen Kühlzyklus, der einen Kompressor (1), einen Außenluftwärmetauscher (3), eine Vielzahl von elektronischen Expansionsventilen (4, 5), die parallel miteinander verbunden sind, und die voneinander hinsichtlich der Strömungsmengen-Öffnungswert-Charakteristik unterschiedlich sind, und einen Innenluftwärmetauscher (6) aufweist, und der das vom Kompressor (1) ausgestoßene Kältemittel dazu treibt, dass es durch den Außenluftwärmetauscher (3), ein jedes der elektronischen Expansionsventile und den Innenluftwärmetauscher (6) gelangt und in den Kompressor (1) gesaugt wird;
eine Ermittlungseinheit, die ausgebildet ist, um den Überhitzungsgrad SH des Kältemittels in einem jeden von Innenlufhwärmetauscher (6) und Außenluflwärmetauscher (3) zu ermitteln; und
eine Steuereinheit, die ausgebildet ist, um den Öffnungswert eines jeden der elektronischen Expansionsventile zu steuern, um den Überhitzungsgrad SH, der mittels der Ermittlungseinheit ermittelt wird, gegen einen vorgegebenen Sollwert SHs zu konvergieren,
wobei die Steuereinheit aufweist:
eine Ermittlungseinrichtung für das Ermitteln einer Differenz ΔSH zwischen dem Überhitzungsgrad SH und dem Sollwert SHs;
eine Steuereinrichtung für das Verändern des Öffnungswertes des elektronischen Expansionsventils (4) mit einem größeren Verhältnis der Strömungsmenge zum Öffnungswert, um den Überhitzungsgrad SH gegen den Sollwert SHs in einem Zustand zu konvergieren, in dem das elektronische Expansionsventil (5), das ein kleineres Verhältnis der Strömungsmenge zum Öffnungswert aufweist, auf einen vorgegebenen Öffnungswert eingestellt ist, wenn die Differenz ΔSZ gleich oder größer ist als ein vorgegebener eingestellter Wert ΔSH2;
eine Steuereinrichtung für das Verändern des Öffnungswertes eines jeden der elektronischen Expansionsventile, wenn die Differenz ΔSH kleiner ist als der eingestellte Wert ΔSH2 und gleich oder größer ist als ein vorgegebener eingestellter Wert ΔSH1; und
eine Steuereinrichtung für das Verändern des Öffnungswertes des elektronischen Expansionsventils (5) mit einem kleineren Verhältnis der Strömungsmenge zum Öffnungswert, um den Überhitztzungsgrad SH gegen den Sollwert SHs in einem Zustand zu konvergieren, in dem das elektronische Expansionsventil (4), das das größere Verhältnis der Strömungsmenge zum Öffnungswert aufweist, auf einen vorgegebenen Öffnungswert eingestellt ist, wenn die Differenz ΔSH kleiner ist als der eingestellte Wert ΔSH1.

2. Klimaanlage nach Anspruch 1, die außerdem aufweist:
einen Inverter (21), der ausgebildet ist, um eine Antriebsleistung für den Kompressor (1) abzugeben;
eine weitere Ermittlungseinheit, die ausgebildet ist, um die Klimatisierungsbelastung eines Raumes zu ermitteln, in dem der Innenluftwärmetauscher (6) installiert ist;
eine weitere Steuereinheit, die ausgebildet ist, um eine Ausgangsfrequenz des Inverters (21) in Übereinstimmung mit der von der weiteren Ermittlungseinheit ermittelten Klimatisierungsbelastung zu steuern.

## Revendications

1. Climatiseur comprenant :
un cycle de réfrigération qui comprend un compresseur (1), un échangeur de chaleur extérieur (3), une pluralité de détendeurs électroniques (4, 5) raccordés en parallèles entre eux et dont les caractéristiques de valeur d'ouverture de quantité de flux sont différentes les unes des autres, et un échangeur de chaleur intérieur (6), et qui pousse un agent réfrigérant évacué du compresseur (1) pour traverser l'échangeur de chaleur extérieur (3), chacun des détendeurs électroniques et l'échangeur de chaleur intérieur (6) et pour être aspiré dans le compresseur (1) ;
une unité de détection configurée pour détecter le degré de surchauffe SH de l'agent réfrigérant dans un échangeur quelconque parmi l'échangeur de chaleur intérieur (6) et l'échangeur de chaleur extérieur (1) ; et
une unité de commande configurée pour commander la valeur d'ouverture de chacun des détendeurs électroniques pour faire converger le degré de surchauffe SH détecté par l'unité de détection vers une valeur cible prédéterminée SHs,
dans lequel l'unité de commande comprend :
un moyen de détection pour détecter la différence ΔSH entre le degré de surchauffe SH et la valeur cible SHs ;
un moyen de commande pour faire varier la valeur d'ouverture du détendeur électronique (4) ayant un plus grand rapport de la quantité de flux à la valeur d'ouverture pour faire converger le degré de surchauffe SH vers la valeur cible SHs, dans un état dans lequel le détendeur électronique (5) ayant un plus petit rapport de la quantité de flux à la valeur d'ouverture est fixé à une valeur d'ouverture prédéterminée, si la différence ΔSH est supérieure ou égale à une valeur de consigne prédéterminée ΔSH2 ;
un moyen de commande pour faire varier la valeur d'ouverture de chacun des détendeurs électroniques si la différence ΔSH est inférieure à la valeur de consigne ΔSH2 et est supérieure ou égale à une valeur de consigne prédéterminée ΔSH1 ; et
un moyen de commande pour faire varier la valeur d'ouverture du détendeur électronique (5) ayant le plus petit rapport de la quantité de flux à la valeur d'ouverture pour faire converger le degré de surchauffe SH vers la valeur cible SHs, dans un état dans lequel le détendeur électronique (4) ayant le plus grand rapport de la quantité de flux à la valeur d'ouverture est fixé à une valeur d'ouverture prédéterminée, si la différence ASH est inférieure à la valeur de consigne ΔSH1.

2. Climatiseur selon la revendication 1, comprenant en outre :
un onduleur (21) configuré pour fournir de l'énergie d'entraînement au compresseur (1) ;
une autre unité de détection configurée pour détecter la charge de climatisation d'une pièce dans laquelle est installé l'échangeur de chaleur intérieur (6) ;
une autre unité de commande configurée pour commander la fréquence de sortie de l'onduleur (21) en fonction de la charge de climatisation détectée par l'autre unité de détection.
